# DEMANDE DE BREVET EUROPEEN

(11) **EP 0 728 528 A1**
(43) Date de publication de la demande: **28.08.1996**
(21) Numéro de dépôt: 96400360.2
(22) Date de dépôt: 22.02.1996
(51) Int. Cl.: B03D 1/24, D21F 1/70

(54) **Cellule pour le traitement par flottation d'un milieu liquide**

(30) Priorité: 23.02.1995 FR 9502089
(71) Demandeur: Gonzalez, Pierre, 33230 Coutras (FR)
(72) Inventeur: Gonzalez, Pierre, 33230 Coutras (FR)
(74) Mandataire: Hud, Robert

(57) **Abrégé**

La cellule (1) comprend une chambre cylindrique supérieure (2) comportant en son centre, sur toute sa hauteur, une conduite verticale (4) d'évacuation de l'encre. Une tuyauterie latérale inférieure (9) reçoit par une bouche (10) une alimentation en pâte à papier diluée dans l'eau et est alimentée en air à partir d'une tuyauterie supérieure (12). Des injecteurs placés sur la tuyauterie (9) injectent la pâte à papier et l'air à l'intérieur de la chambre (2). Chaque injecteur (11) a la forme d'un tube de diamètre constant et s'ouvre à son extrémité de sortie (19) par une dizaine d'orifices (20) en forme de nid d'abeilles, en assurant une dispersion satisfaisante de l'air. Les bulles d'air soulèvent les particules d'encre pour former une mousse évacuée par la conduite (4).

La cellule selon l'invention assure un traitement amélioré du milieu de liquide en augmentant le temps de séjour de ce dernier dans la cellule.

## Description

La présente invention concerne une cellule pour le traitement par flottation d'un milieu liquide.

Elle s'applique particulièrement, mais non exclusivement, au désencrage de la pâte à papier et au traitement des eaux résiduelles de papeterie.

Les cellules de désencrage par flottation actuellement proposées sur le marché sont du type dans lequel la pâte est propulsée dans la cellule par une série d'injecteurs et tourne à vitesse relativement élevée à l'intérieur de la cellule. De l'air libre est introduit par les injecteurs pour créer à l'intérieur de la cellule des bulles d'air qui feront monter les particules d'encre.

Ces cellules de désencrage par flottation connues présentent l'inconvénient que le temps de séjour de la pâte à papier à l'intérieur de la cellule est trop court pour obtenir un bon désencrage. De plus l'agitation trop importante qui règne à l'intérieur de ces cellules provoque une floculation entraînant la perte de fibres.

Dans les systèmes connus de traitement d'eaux résiduelles par flottation, une pressurisation d'air envoie dans la cellule de flottation de l'air sous pression mélangé à de l'eau. Les impuretés en surface sont enlevées à l'aide d'un godet tournant articulé sur le centre de la cellule.

Ces systèmes connus de traitement d'eaux résiduelles présentent l'inconvénient que la vitesse de circulation de l'eau à l'intérieur de la cellule est trop grande pour permettre d'obtenir un nettoyage réellement efficace de l'eau.

La présente invention a pour objet de remédier aux inconvénients mentionnés ci-dessus présentés par les cellules de traitement connues et elle propose à cet effet une cellule de traitement agissant par flottation qui, en réduisant très sensiblement la vitesse de circulation du milieu liquide à traiter à l'intérieur de la cellule, permet d'améliorer substantiellement la qualité du traitement de ce milieu liquide.

Selon l'invention, la cellule de traitement d'un milieu liquide est du type comprenant au moins une chambre cylindrique à l'intérieur de laquelle on introduit par des injecteurs le milieu liquide à traiter et de l'air destiné à faire monter jusqu'à la surface les particules ou déchets contenus dans le milieu liquide afin de les évacuer. Elle se caractérise en ce que ces dits injecteurs présentent un corps tubulaire d'un diamètre sensiblement constant et une série d'orifices de sortie en forme de nid d'abeilles.

Par cette structure des injecteurs, l'air injecté ne subit qu'une poussée réduite et se trouve convenablement dispersé pour se répartir de façon homogène à l'intérieur du milieu liquide en déplacement à l'intérieur de la cellule.

La cellule selon l'invention est alors prévue avec des dimensions sensiblement plus grandes que les cellules conventionnelles, et la vitesse de circulation à l'intérieur de la cellule se trouve fortement réduite, jusqu'à environ cinq fois, ce qui permet de réaliser un traitement beaucoup plus efficace.

L'alimentation en air des injecteurs s'effectue à partir de valves de régulation qui évitent les turbulences à l'intérieur de la cellule et donc la perte de fibres dans le cas du désencrage de pâte à papier. De plus, le conduit vertical servant alors à l'évacuation des bulles d'air chargées d'encre se termine par un élément de récupération de fibres.

Pour bien faire comprendre le dispositif selon l'invention, on en décrira ci-après, à titre d'exemples non limitatifs, deux formes d'exécution préférées en référence au dessin schématique annexé dans lequel :
la figure 1 est une vue en élévation d'une cellule de désencrage par flottation selon la présente invention :
la figure 2 est une vue en plan de la cellule de la figure 1 ;
la figure 3 est une vue en coupe verticale longitudinale d'un injecteur équipant la cellule de désencrage des figures 1 et 2 ;
la figure 4 est une vue en bout de l'injecteur de la figure 3 ;
la figure 5 est une vue en élévation d'une cellule de traitement d'eaux résiduelles de papeterie selon une seconde forme d'exécution de l'invention ; et
la figure 6 est, à plus grande échelle, une vue en plan de la cellule de la figure 5.

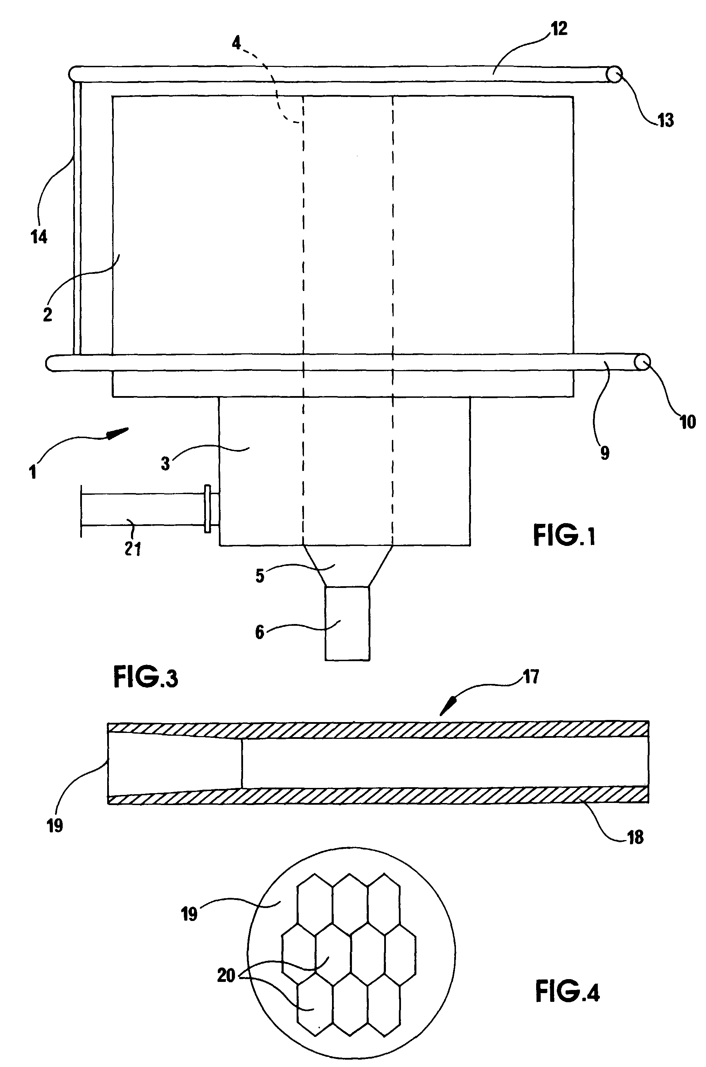

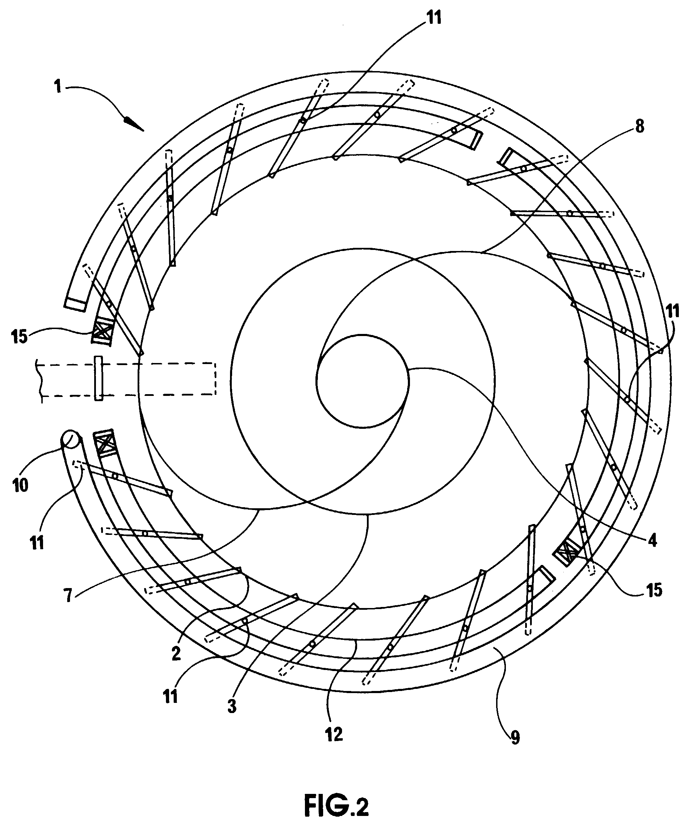

Aux figures 1 à 4, selon une première forme d'exécution de la présente invention, on a représenté de façon générale en 1 une cellule de désencrage qui comprend une chambre cylindrique supérieure 2 se poursuivant par une chambre cylindrique inférieure 3 de même axe vertical. En son centre, sur toute sa hauteur, la cellule 1 comporte une conduite verticale 4 d'évacuation de l'encre, qui est ouverte à son extrémité supérieure et qui se poursuit, au-dessous de la chambre inférieure 3, par une partie inclinée 5 se prolongeant par un élément de récupération de fibres 6.

Cette cellule de désencrage 1 est de dimensions bien supérieures à celles des cellules de désencrage conventionnelles et, à titre d'exemple, on indiquera que sa chambre supérieure 2 peut avoir un diamètre d'environ 5,50 m et une hauteur d'environ 4 m, que sa chambre inférieure 3 peut avoir un diamètre d'environ 3 m et une hauteur d'environ 2 m, et que sa conduite verticale centrale peut avoir un diamètre d'environ 1 m.

Vers son extrémité supérieure la conduite verticale 4 est solidaire d'une extrémité de deux parois incurvées 7,8, symétriques par rapport au centre de la cuve, qui s'étendent radialement et dont les autres extrémités sont solidaires de la face intérieure de la paroi de la chambre supérieure 2. Comme on le verra plus loin, ces parois 7,8 servent à guider vers l'intérieur de la conduite 4 la mousse chargée d'encre se trouvant à la surface de la pâte à papier en circulation dans la cuve 1.

Une tuyauterie latérale 9 fait extérieurement le tour de la chambre cylindrique supérieure 2, à la partie inférieure de celle-ci, et est alimentée en pâte à papier diluée par une bouche 10, sous l'action d'une pompe de distribution.

Une tuyauterie 12, équipée de trois prise d'air 13, est disposée au-dessus de la chambre supérieure 2 et cette tuyauterie 12 communique, par des tubes verticaux 14 et des valves de régulation 15, avec la tuyauterie latérale 9. Celle-ci assure par des injecteurs 11, la projection à l'intérieur de la chambre 2 d'un mélange de pâte à papier et d'air.

Selon l'invention, chaque injecteur 11 assurant la projection de pâte à papier et d'air présente la forme d'un tube 18 ayant un diamètre constant sur toute sa longueur et il s'ouvre à son extrémité de sortie 19 par une dizaine d'orifices 20 en forme de nid d'abeilles.

Une telle structure des injecteurs 11 assure une poussée inférieure et mieux répartie par rapport aux injecteurs conventionels, en permettant une dispersion plus satisfaisante de l'air dans la pâte à papier et donc une meilleure montée de l'encre avec une très faible perte de fibres.

En partie basse de la chambre cylindrique inférieure 3, un conduit 21 assure la sortie de la pâte à papier après désencrage.

Le fonctionnement du dispositif se comprend immédiatement d'après la description qui précède.

De la pâte à papier devant être désencrée et diluée dans de l'eau, par exemple à 1% de concentration, arrive par la tuyauterie 9 et est introduite dans la cellule 1, en mélange avec de l'air, par les injecteurs 11. Une bonne dispersion de l'air dans la pâte à papier étant ainsi assurée.

L'air, l'eau et la pâte à papier tournent dans la cellule 1 sous l'effet de la poussée fournie par les injecteurs 11 et par la pompe de distribution de la pâte, à une vitesse d'environ cinq fois inférieure par rapport aux cellules conventionnelles.

Les particules d'encre contenues dans la pâte à papier sont soulevées par les bulles d'air et, grâce à l'addition de produits chimiques tels que des savons ou des phosphates, forment une mousse en surface qui tourne dans le même sens que la pâte. Cette mousse est arrêtée par les parois 7,8 formant barrières et se trouve orientée vers la conduite centrale 4 formant chute.

En bas de la conduite centrale 4, la mousse évacuée tombe sur le plan incliné 5 où une pulvérisation de liquide (non schématisée au dessin) permet de séparer les fibres, rassemblées dans l'élément de récupération 6, de l'encre.

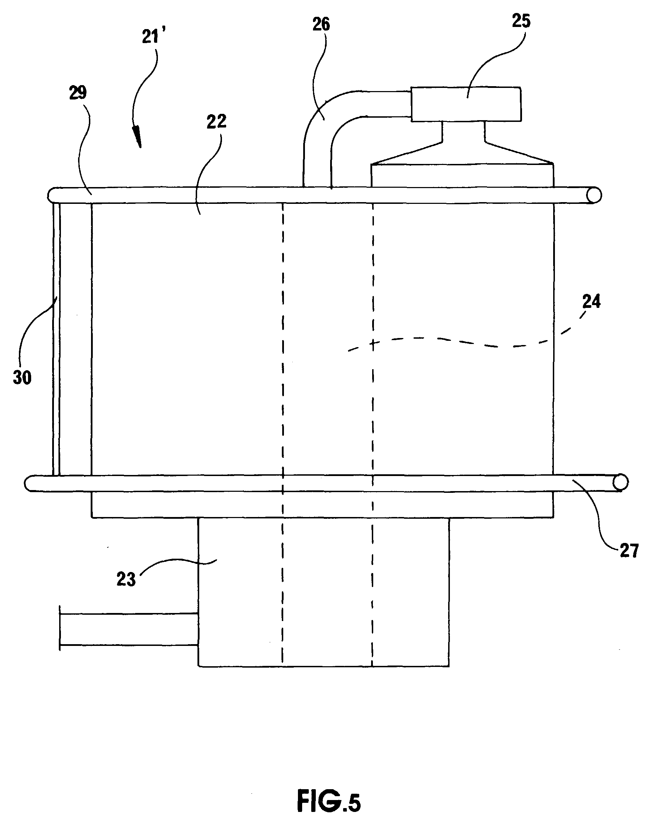

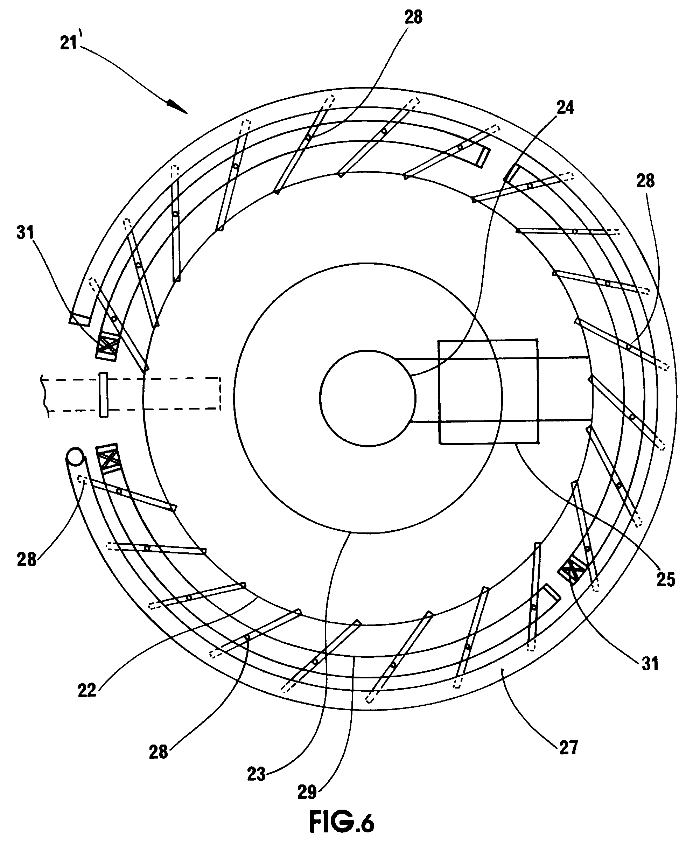

En référence aux figures 5 et 6 on a représenté une seconde forme d'exécution de l'invention s'appliquant au traitement d'eaux résiduelles de papeterie.

La cellule de traitement 21, à chambres cylindriques supérieure 22 et inférieure 23, est en tous points semblable à celle représentée aux figures 1 et 2. Un conduit central vertical 24 assure l'évacuation des déchets remontant en surface de l'eau traitée.

La cellule 21', dont les dimensions sont du même ordre que celles représentées aux figures 1 et 2, comporte sur la moitié de sa surface horizontale un système d'aspiration 25, comportant par exemple une turbine non représentée au dessin, qui comprend une bouche d'aspiration agissant au ras de la surface de l'eau, à l'intérieur de la cellule, pour aspirer les déchets se trouvant à la surface et les évacuer par un conduit coudé 26 et par le conduit central vertical 24.

Comme dans la cellule des figures 1 et 2, l'injection, à l'intérieur de la cellule 21', d'eau résiduelle et d'air est assurée par des injecteurs identiques à celui représenté à la figure 3 c'est-à-dire présentant la forme d'un tube de diamètre constant sur toute sa longueur et s'ouvrant à son orifice de sortie par une dizaine d'orifices en forme de nid d'abeilles. Une tuyauterie périphérique inférieure 27 alimente de tels injecteurs (figurés en 28 à la figure 6) en eau résiduelle à traiter, alors qu'une tuyauterie supérieure 29 équipée de prises d'air alimente, par des tubes verticaux 30 et des valves de régulation 31, les injecteurs 28.

Comme on l'a vu plus haut, cette structure des injecteurs 28 assure une poussée inférieure et mieux répartie de l'air dans l'eau résiduelle, en permettant une circulation plus lente de l'eau à l'intérieur de la cellule et une plus grande efficacité de l'air assurant la montée des déchets à la surface de l'eau.

Le système d'aspiration 25, qui présente une bouche d'aspiration positionnée au ras de l'eau, assure l'évacuation de ces déchets par le conduit coudé 26 et le conduit central 24.

On comprendra que la description ci-dessus a été donnée à simple titre d'exemple, sans caractère limitatif, et que des adjonctions ou des modifications constructives pourraient lui être apportées sans sortir du cadre de l'invention.

## Revendications

1. Cellule pour le traitement de milieux liquides par flottation, comprenant au moins une chambre cylindrique (2,3) dans laquelle on introduit par des injecteurs (11,28) le milieu liquide à traiter et de l'air destiné à soulever jusqu'à la surface les particules ou déchets contenus dans le milieu liquide afin de les évacuer, caractérisée en ce que les dits injecteurs (11,28) présentent un corps tubulaire (18) de diamètre sensiblement constant et une série d'orifices de sortie (20) en forme de nid d'abeilles, de façon à assurer une bonne dispersion de l'air injecté qui se répartit de façon homogène à l'intérieur du milieu liquide en déplacement dans la cellule (1,21).

2. Cellule selon la revendication 1, caractérisée en ce que les dits orifices de sortie (20) sont au nombre d'une dizaine.

3. Cellule selon la revendication 1 ou 2, caractérisée en ce que les dits injecteurs (11,28) sont alimentés en air à partir de valves de régulation (15,31) qui évitent les turbulences à l'intérieur de la chambre (2,3 - 22,23).

4. Cellule selon l'une quelconque des revendications précédentes, caractérisée en ce que sa chambre cylindrique (2) présente un diamètre de l'ordre de 5 mètres et une hauteur de l'ordre de 4 mètres.

5. Cellule selon l'une quelconque des revendications 1 à 4 pour le désencrage de pâte à papier, caractérisée en ce que les particules d'encre entraînées en surface par des bulles d'air sont évacuées par un conduit vertical (4) formant chute qui se termine par un élément de récupération de fibres (6).

6. Cellule selon l'une quelconque des revendications 1 à 4 pour le traitement d'eaux résiduelles de papeterie, caractérisée en ce que les déchets entraînés en surface par les bulles d'air sont évacués par aspiration, en passant par un conduit central vertical.

7. Cellule selon la revendication 6, caractérisée en ce que les déchets se trouvant en surface de l'eau résiduelle sont aspirés par une bouche d'aspiration positionnée au ras de l'eau.
